# EUROPEAN PATENT APPLICATION

(11) **EP 2 642 400 A2**
(43) Date of publication of application: **25.09.2013**
(21) Application number: 12193948.2
(22) Date of filing: 23.11.2012
(51) Int. Cl.: G06F 13/38

(54) **Processing device and processing system**

(30) Priority: 19.03.2012 JP 2012061871; 06.09.2012 JP 2012196182
(71) Applicant: FUJITSU LIMITED, Kawasaki-shi, Kanagawa 211-8588 (JP)
(72) Inventor: Imamaki, Takashi, Kawasaki-shi, Kanagawa 211-8588 (JP); Honma, Hayato, Kawasaki-shi, Kanagawa 211-8588 (JP)
(74) Representative: Ward, James Norman

(57) **Abstract**

A processing device includes: a first connecter including a first pin and a second pin which is able to be coupled to one of a first external apparatus and a second external apparatus; and a controller to set a signal of the second pin as an input signal, detect coupling of the first connecter with the first external apparatus or the second external apparatus, set the signal of the second pin as an output signal based on detection of the coupling of the first connecter with the second external apparatus, and outputs a first signal to the second pin.

## Description

### FIELD

The embodiments discussed herein are related to a processing device and a processing system.

### BACKGROUND

For example, a processing device includes a main body side connecter to which an external apparatus is coupled is in a shape complied with a first interface standard, a first main body side communication unit that performs communication complied with the first interface standard with the external apparatus by using a main body side pins provided in the main body side connecter, and a second main body communication unit that performs the communication complied with a second interface standard with the external apparatus , by using some of a plurality of main body side power source pins provided in the main body side connecter.

For example, a coupling confirmation system includes an external apparatus and a main body apparatus into which the external apparatus is inserted. The external apparatus complies with a predetermined interface standard and includes an external apparatus side connecter having a plurality of shorting pins that is shortened inside thereof. The main body apparatus complies with the predetermined interface standard and includes a main body apparatus side connector, which has a plurality of opposing pins provided in the opposing position of the plurality of shorting pins, and a coupling detecting unit that detects that the external apparatus side connecter is coupled to the main body apparatus side connecter according to a state of voltage or current of a specific opposing pin that is coupled to a specific opposing pin from among the plurality of opposing pins.

A disk device uses a power source/ground pin on the interface standard as a firmware rewriting communication pin and may not use a special connector for firmware rewriting.

The related art is disclosed in Japanese Laid-open Patent Publication No. 2011-138465, Japanese Laid-open Patent Publication No. 2011-118844, or Japanese Laid-open Patent Publication No. 2004-206505.

In a processing system in which a first external apparatus is able to be coupled to a processing device through a connecter, when a second external apparatus is coupled to the processing device through the similar connecter, either the first external apparatus or the second external apparatus is coupled is recognized.

If all the pins to be coupled to the first external apparatus in the connector are used and if there is no unused pin, the processing device may not recognize either the first external apparatus or the second external apparatus is coupled.

### SUMMARY

According to one aspect of the embodiments, a processing device includes: a first connecter including a first pin and a second pin which is able to be coupled to one of a first external apparatus and a second external apparatus; and a controller to set a signal of the second pin as an input signal, detect coupling of the first connecter with the first external apparatus or the second external apparatus, set the signal of the second pin as an output signal based on detection of the coupling of the first connecter with the second external apparatus, and outputs a first signal to the second pin.

According to the embodiments, the processing device recognizes either the first external apparatus or the second external apparatus is coupled if there is no unused pin in the connector.

The object and advantages of the invention will be realized and attained by means of the elements and combinations particularly pointed out in the claims. It is to be understood that both the foregoing general description and the following detailed description are exemplary and explanatory and are not restrictive of the invention, as claimed.

### BRIEF DESCRIPTION OF THE DRAWINGS

FIG. 1 illustrates an exemplary processing system;

FIG. 2 illustrates an exemplary connector pin;

FIG. 3 illustrates an exemplary processing device;

FIG. 4 illustrates an exemplary connecter;

FIGs. 5A and 5B illustrate an exemplary signal transmission using a pin;

FIG. 6 illustrates an exemplary processing of a processing system;

FIG. 7 illustrates an exemplary processing of a processing system;

FIG. 8 illustrates an exemplary processing system; and

FIG. 9 illustrates an exemplary external apparatus.

### DETAILED DESCRIPTION OF THE EMBODIMENTS

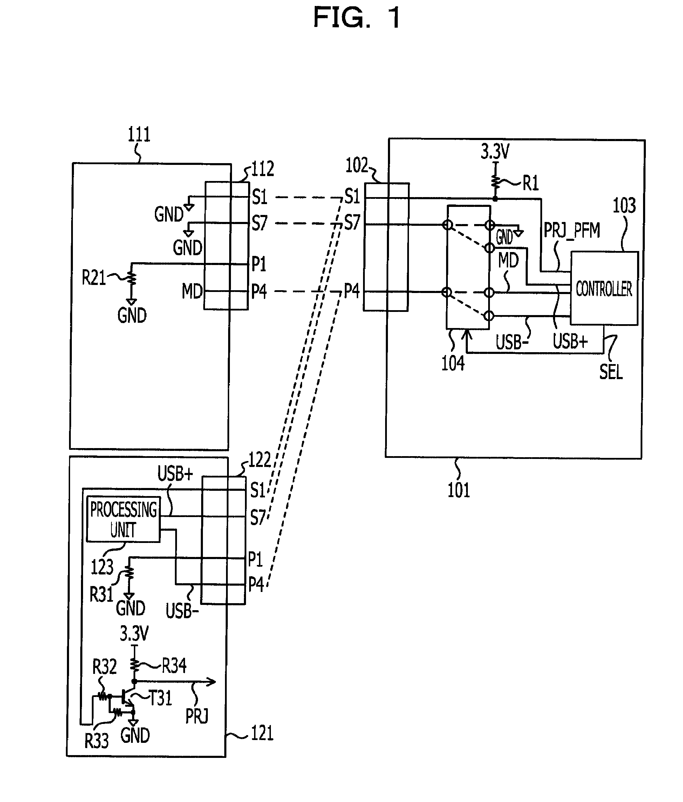

FIG. 1 illustrates an exemplary processing system. In the processing system, a processing device 101 is able to be coupled to a first external apparatus 111 or a second external apparatus 121. The processing device 101 may be a laptop personal computer, for example. The processing device 101 may include a first connecter 102, a controller 103, a switch 104, and a first resistor R1. The first external apparatus 111 and the second external apparatus 121 may be referred to as a bay unit and may be a cartridge that is detachable to and from the processing device 101. The first external apparatus 111 may be an Optical Disk Drive (ODD) or a Hard Disk Drive (HDD), for example. The ODD may be a Compact Disc Read Only Memory (CD-ROM) drive or a Digital Versatile Disc (DVD) drive, for example. The second external apparatus 121 may be a screen or a projector that is able to display images on a wall, for example.

The processing device 101, which includes the first connecter 102, is able to be coupled to the first external apparatus 111 or the second external apparatus 121 through the first connecter 102. The first external apparatus 111 includes a second connecter 112. The second connecter 112 is able to be coupled to the first connecter 102 of the processing device 101. The second external apparatus 121 includes a third connecter 122. The third connecter 122 is able to be coupled to the first connecter 102 of the processing device 101.

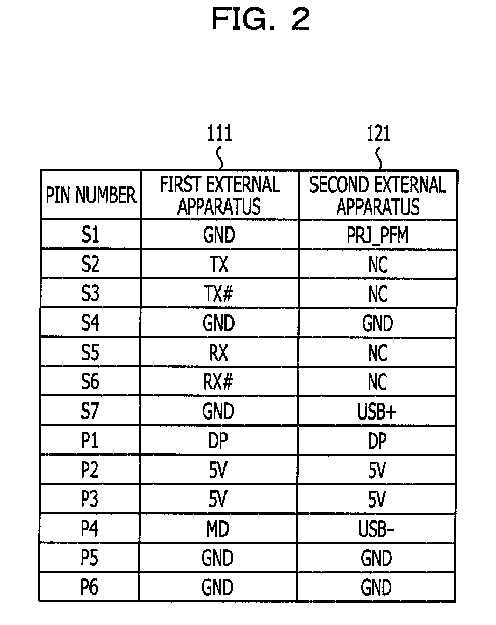

FIG. 2 illustrates an exemplary connecter pin. The first connecter 102, the second connecter 112, and the third connecter 122 may each include a pin S1, a pin S2, a pin S3, a pin S4, a pin S5, a pin S6, a pin S7, a pin P1, a pin P2, a pin P3, a pin P4, a pin P5, and a pin P6.

The second connecter 112 of the first external apparatus 111 may be coupled to the first connecter 102 of the processing device 101. The first external apparatus 111 may be, for example, an optical disk drive or a hard disk drive. The second connecter 112 may be a connecter of Serial Advanced Technology Attachment (SATA) standard, and signal are input and output to and from the second connecter 112 based on the interface of the SATA standard. The pin S1 may be a pin of ground potential GND for a transmission signal TX of the SATA standard. The pin S2 may be a pin of the transmission signal TX of the SATA standard. The pin S3 may be a pin of a transmission signal TX # of the SATA standard. The transmission signals TX and TX# may be differential signals of which the phases are mutually inversed. The pin S4 may be a pin of the ground potential GND for the transmission signal TX# and a reception signal RX of the SATA standard. The pin S5 may be a pin of the reception signal RX of the SATA standard. The pin S6 may be a pin of a reception signal RX# of the SATA standard. The reception signals RX and RX# may be differential signals of which the phases are mutually inversed. The pin S7 is a pin of the ground potential GND for the reception signal RX# of the SATA standard. The pin P1 may be a pin of a signal DP used to detect that an external apparatus is coupled to the processing device 101. The pin P1 at a high level indicates that the external apparatus is not coupled. The pin P1 at a low level indicates that the external apparatus is coupled. The pin P2 and the pin P3 may be pins of a power source potential 5V. The pin P4 may be a pin of a diagnosis signal MD at product shipping. The pin P5 and the pin P6 may be pins of the ground potential GND for the power source potential 5V.

The third connecter 122 of the second external apparatus 121 may be coupled to the first connecter 102 of the processing device 101. The second external apparatus 121 may be a projector, for example. In the third connecter 122, signals are input and output using an interface of Universal Serial Bus (USB) standard. The pin S1 may be a pin of a luminance setting signal PRJ_PFM of the second external apparatus 121, for example, a projector. The high level luminance setting signal PRJ_PFM may correspond to a setting signal of big luminance. The low level luminance setting signal PRJ_PFM may correspond to the setting signal of small luminance. When the processing device 101, for example, a laptop personal computer, is coupled to an Alternating Current (AC) power source by a plug, a sufficient power may be obtained. Thus, the luminance setting signal PRJ_PFM is set to the big luminance. When the processing device 101 is driven by a battery without being coupled to the AC power source, the sufficient power may not be obtained. Thus, the luminance setting signal PRJ_PFM is set to the small luminance. The pin S2 and the pin S3 may be a non-connection pin (not coupled). The pin S4 may be a pin of the ground potential GND. The pin S5 and the pin S6 may be a non-connection pin (not coupled). The pin S7 may be a pin of a signal USB+ of the USB standard. The pin P1 may be a pin of a signal DP used to detect that the external apparatus is coupled to the processing device 101. The pin P1 at a high level indicates that the external apparatus is not coupled. The pin P1 at a low level indicates that the external apparatus is coupled. The pin P2 and the pin P3 may be pins of the power source potential 5V. The pin P4 may be a pin of a signal USB- of the USB standard. The signals USB+ and USB- may be differential signals of which the phases are mutually inversed. The pin P5 and the pin P6 may be pins of the ground potential GND for the power source potential 5V.

The first external apparatus 111 is able to be coupled to the processing device 101. Based on later expansion, the second external apparatus 121 is set to be able to be coupled to the processing device 101. The processing device 101 may recognize either the first external apparatus 111 or the second external apparatus 121 is coupled.

All the pins of the second connecter 112 are used to couple the first external apparatus 111 to the processing device 101, so that there may be no unused pin. Therefore, the processing device 101 may not be able to recognize either the first external apparatus 111 or the second external apparatus 121 is coupled.

The pin P1 may be a pin of the signal DP used to detect that the external apparatus is coupled to the processing device 101. The pin P1 at a high level indicates that the external apparatus is not coupled. The pin P1 wt a low level indicates that the external apparatus is coupled. If nothing is coupled to the first connecter 102 of the processing device 101, the pin P1 has a first potential, for example, the pin P1 is at a high level. Thus, the processing device 101 may recognize that the first external apparatus 111 and the second external apparatus 121 are not coupled to the first connecter 102. When the first external apparatus 111 or the second external apparatus 121 is coupled to the first connecter 102 of the processing device 101, the pin P1 has a second potential, for example, the pin P1 is at a low level. Thus, the processing device 101 may recognize that the first external apparatus 111 or the second external apparatus 121 is coupled. The processing device 101 may not recognize the first external apparatus 111 or the second external apparatus 121 is coupled.

If there is an unused pin in the second connecter 112 of the first external apparatus 111, the unused pin is used to recognize either the first external apparatus 111 or the second external apparatus 121 is coupled. There may be no unused pin in the second connecter 112 of the first external apparatus 111.

As well as the first external apparatus 111 and the second external apparatus 121, an external battery may be coupled to the processing device 101. The processing device 101, which includes a fourth connecter separately from the first connecter 102, may be coupled to the external battery through the fourth connecter. The second external apparatus 121 may be coupled to the first connecter 102 and the fourth connecter of the processing device 101. The processing device 101 may detect the potential of the pin of the fourth connecter and recognize either the first external apparatus 111 or the second external apparatus 121 is coupled. The fourth connecter may be provided in the processing device 101 to which the battery is not typically attached. By using the first connecter 102 instead of the fourth connecter, the processing device 101 may recognize either the first external apparatus 111 or the second external apparatus 121 is coupled.

The processing device 101 sets a signal of the pin S1 as an input signal. If the first external apparatus 111 is coupled to the processing device 101, the pin S1 of the first connecter 102 becomes a low level. If the second external apparatus 121 is coupled to the processing device 101, the pin S1 of the first connecter 102 becomes a high level. If the potential of the first pin P1 is at the low level and if the potential of the second pin S1 has a third potential, for example, the second pin is at the low level, the processing device 101 recognizes that the first external apparatus 111 is coupled to the first connecter 102. If the first pin P1 is at the low level and if the second pin S1 has the fourth potential, for example, the second pin is at the high level, the processing device 101 recognizes that the second external apparatus 121 is coupled to the first connecter 102. When the processing device 101 recognizes that the second external apparatus 121 is coupled to the first connecter 102, the signal of the second pin S1 is set as an output signal and the luminance setting signal PRJ_PFM is output to the second pin S1.

In FIG. 1, the first external apparatus 111 includes the second connecter 112. The pin S1 and the pin S7 of the second connecter 112 are coupled to a node of the ground potential GND. The pin P1 of the second connecter 112 is coupled to the node of the ground potential GND through a resistor R21. The pin P4 of the second connecter 112 is coupled to the node of a diagnosis signal MD. The resistor R21 may be a pull-down resistor of approximately 1kΩ.

The second external apparatus 121 includes the third connecter 122. The pin S1 of the third connecter 122 is coupled to a base of a bipolar transistor T31 through a resistor R32. A second resistor R33 is coupled between the base and an emitter of an npn bipolar transistor T31. The emitter of the npn bipolar transistor T31 is coupled to the node of the ground potential GND, and a collector thereof is coupled to the node of the power source potential 3.3V through a resistor R34. A luminance setting signal PRJ is output from the collector of the npn bipolar transistor T31.

The pin S7 of the third connecter 122, which may be a pin of the signal USB+ of the USB standard, is coupled to a processing unit 123. The pin P4 of the third connecter 122, which may be a pin of the signal USB- of the USB standard, is coupled to the processing unit 123. The processing unit 123 processes the differential signals USB+ and USB- of the USB standard. The pin P1 of the third connecter 122, which may be a pin of an external apparatus detection signal DP, is coupled to the node of the ground potential GND through a resistor R31. The resistor R31 may be the pull-down resistor of approximately 1kΩ.

The processing device 101 includes the first connecter 102. The pin S1 of the first connecter 102, which may be a pin of the luminance setting signal PRJ_PFM, is coupled to the controller 103. The resistor R1 is coupled between the node of a power source potential 3.3V and the pin S1 of the first connecter 102. If the first external apparatus 111 is coupled to the processing device 101, the pin S1 is coupled to the node of the ground potential GND and becomes the low level. If the second external apparatus 121 is coupled to the processing device 101, a serial coupling circuit of the resistors R1, R32, and R33 is coupled between the node of the power source potential 3.3V and the node of the ground potential GND. For example, the resistor R1 may be 10kΩ, and the serial coupling circuit of the resistors R32 and R33 may be 94kΩ. The potential of the pin S1 may be in the high level of approximately 2.98V by divided resistance of the resistors of 10kΩ and 94kΩ.

The controller 103 sets the signal of the pin S1 as an input signal. If the potential of the pin S1 is at a low level, the controller 103 recognizes that the first external apparatus 111 is coupled to the first connecter 102. If the potential of the pin S1 is at a high level, the controller 103 recognizes that the second external apparatus 121 is coupled to the first connecter 102.

If the controller 103 recognizes that the first external apparatus 111 is coupled to the first connecter 102, the controller 103 sets a selection signal SEL to a low level. If the controller 103 recognizes that the second external apparatus 121 is coupled to the first connecter 102, the controller 103 sets the selection signal SEL to a high level.

If the selection signal SEL is at the low level, the switch 104 couples the third pin S7 to the node of the ground potential GND and couples the third pin P4 to the terminal of the diagnosis signal MD of the controller 103. If the selection signal SEL is at the high level, the switch 104 couples the third pin S7 to the terminal of the signal USB+ of the USB standard of the controller 103 and couples the pin P4 to the terminal of the signal USB- of the USB standard of the controller 103.

If the controller 103 recognizes that second external apparatus 121 is coupled to the first connecter 102, the controller 103 sets the signal of the pin S1 as an output signal and outputs the luminance setting signal PRJ_PFM to the pin S1.

For example, if the second connecter 112 of the first external apparatus 111 has no unused pin, the controller 103 may recognize either the first external apparatus 111 or the second external apparatus 121 is coupled.

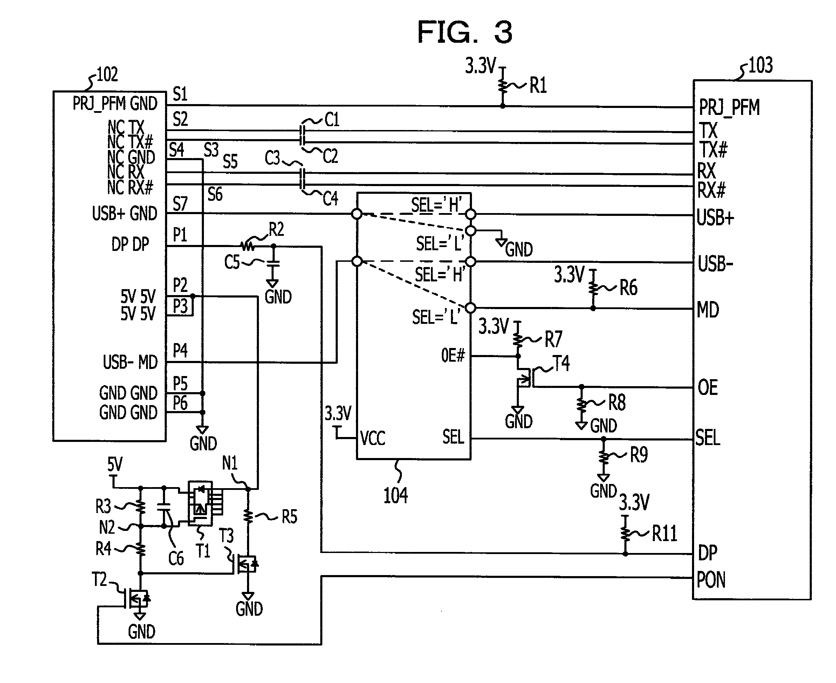

FIG. 3 illustrates an exemplary processing device. The processing device 101 illustrated in FIG. 3 may be the processing device illustrated in FIG. 1. A capacity C1 is coupled between the pin S2 of the first connecter 102 and the terminal of the transmission signal TX of the controller 103. A capacity C2 is coupled between the pin S3 of the first connecter 102 and the transmission signal TX# of the controller 103. The pins S4, P5, and P6 of the first connecter 102 are coupled to the node of the ground potential GND. A capacity C3 is coupled between the pin S5 of the first connecter 102 and the terminal of the reception signal RX of the controller 103. A capacity C4 is coupled to the pin S6 of the first connecter and the terminal of the reception signal RX# of the controller 103. A resistor R6 is coupled to between the node of the power source potential 3.3 V and the terminal of the diagnosis signal MD of the controller 103. The switch 104 has the terminal of an enable signal OE# of a negative logic, and a power source terminal VCC is coupled to the node of the power source potential 3.3V. The drain of an n channel electric effect transistor T4 is coupled to the terminal of the enable signal OE#. The gate of the n channel electric effect transistor T4 is coupled to the terminal of an enable signal OE of a positive logic of the controller 103. The source of the n channel electric effect transistor T4 is coupled to the node of the ground potential GND. A resistor R7 is coupled between the node of the power source potential 3.3V and the terminal of the enable signal OE#. A resistor R8 is coupled between the terminal of the enable signal OE and the node of the ground potential GND. A resistor R9 is coupled between the terminal of the selection signal SEL and the node of the ground potential GND.

A resistor R2 is coupled between the pin P1 of the first connecter 102 and the terminal of an external apparatus detection signal DP of the controller 103. A capacity C5 may be a chattering prevention capacity coupled between the terminal of the external apparatus detection signal DP of the controller 103 and the node of the ground potential GND. A resistor R11 is coupled between the node of the power source potential 3.3V and the terminal of the external apparatus detection signal DP of the controller 103.

The pins P2 and P3 of the first connecter 102 are coupled to a node N1. The gate of an n channel electric effect transistor T2 is coupled to the terminal of a power source on signal PON of the controller 103. The drain of the n channel electric effect transistor T2 is coupled to the gate of an n channel electric effect transistor T3. The source of the n channel electric effect transistor T2 is coupled to the node of the ground potential GND. A resistor R3 is coupled between the node of the power source potential 5V and a node N2. A resistor R4 is coupled between the node N2 and the drain of the n channel electric effect transistor T2. A capacity C6 is coupled to the resistor R3 in parallel. The drain of a transistor T3 is coupled to the node N1 through a resistor R5. The source of the transistor T3 is coupled to the node of the ground potential GND. The gate of a p channel electric effect transistor T1 is coupled to a node N2. The source of the p channel electric effect transistor T1 is coupled to the node of the power source potential 5V. The drain of the p channel electric effect transistor T1 is coupled to the node N 1.

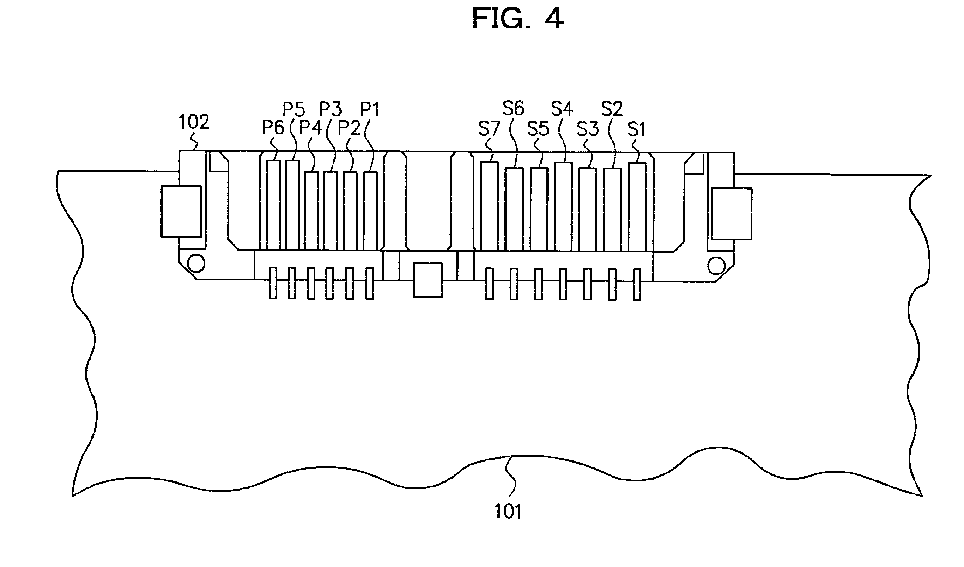

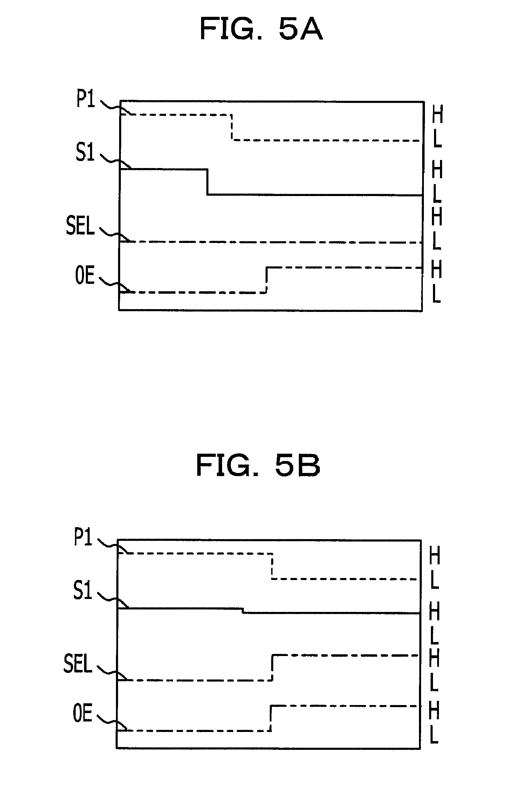

FIG. 4 illustrates an exemplary connecter. The connecter illustrated in FIG. 4 may be the first connecter 102 of the processing device 101 illustrated in Fig. 1. The first connecter 102 includes the pins S1 to S7 and P1 to P6. The pins S1, S4, S7, P5, and P6 are longer than the pins S2, S3, S5, S6, and P1 to P4. Especially, the pin S1 is longer than the pin P1. When the first external apparatus 111 or the second external apparatus 121 is coupled to the first connecter 102, the pin S1 of the first connecter 102 touches the first external apparatus 111 or the second external apparatus 121. After that, the pin P1 of the first connecter 102 touches the first external apparatus 111 or the second external apparatus 121. FIGs. 5A and 5B illustrate an exemplary signal transmission using a pin. For example, as illustrated in FIG. 5, the signal of the pin S1 is previously transmitted. After that, the signal of the pin P1 is transmitted.

FIG. 5A illustrates a time chart of a signal in a case where the first external apparatus 111 is coupled to the processing device 101. FIG. 5B illustrates a time chart of a signal in a case where the second external apparatus 121 is coupled to the processing device 101. At an initial time in FIGs. 5A and 5B, nothing is coupled to the first connecter 102 of the processing device 101. For example, since the pin P1 of the first connecter 102 is coupled to the node of the power source potential 3.3V through the resistor R11 illustrated in FIG. 3, the pin P1 is at the high level. Since the pin S1 of the first connecter 102 is coupled to the power source potential 3.3V through the resistor R1, the pin S1 is at the high level. Since the terminal of the selection signal SEL is coupled to the node of the ground potential GND through the resistor R9, the terminal is at the low level. Since the terminal of the enable signal OE is coupled to the node of the ground potential GND through the resistor R8, the terminal is at the low level.

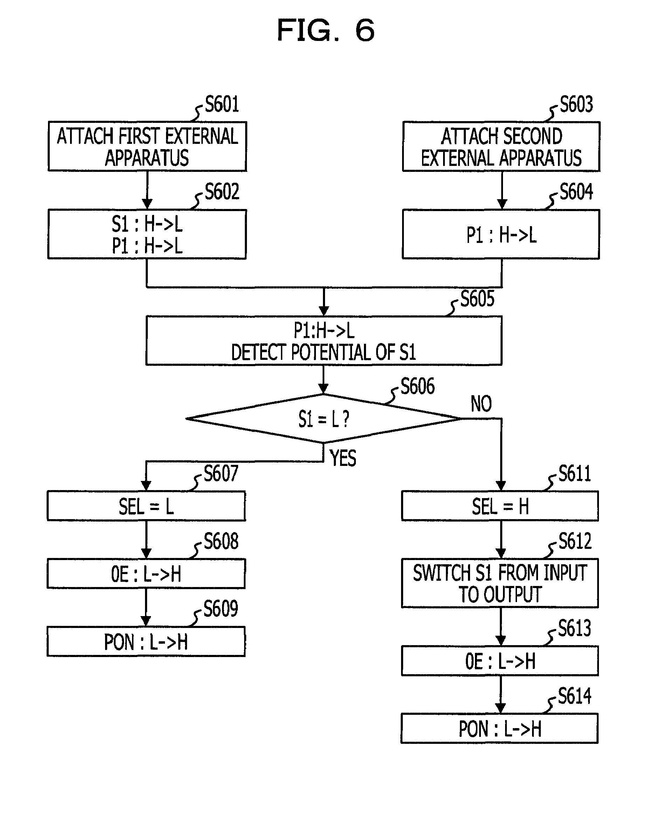

FIG. 6 illustrates an exemplary processing of a processing system. The controller 103 sets the signal of the pin S1 of the first connecter 102 as an input signal. The processing device 101 may be in a power-on state.

In an operation S601, the first external apparatus 111 is attached to the processing device 101. In an operation S602, the pin S1 of the first connecter 102 comes into contact with the first external apparatus 111. For example, as illustrated in FIG. 5A, the pin S1 of the first connecter 102 is coupled to the node of the ground potential GND of the first external apparatus 111 illustrated in FIG. 1, and the pin S1 changes from the high level to the low level. The pin P1 of the first connecter 102 is coupled to the node of the ground potential GND through the resistor R21 of the first external apparatus 111 illustrated in FIG. 1, and the pin P1 changes from the high level to the low level. The process goes to an operation S605.

The second external apparatus 121 may be attached to the processing device 101. In an operation S603, the second external apparatus 121 is attached to the processing device 101. In an operation S604, the pin S1 of the first connecter 102 comes into contact with the second external apparatus 121. For example, as illustrated in FIG. 5B, the pin S1 of the first connecter 102 is coupled to the base of the npn bipolar transistor T31 of the second external apparatus 121 illustrated in FIG. 1, and the pin S1 changes from the high level of 3.3V to the high level of 2.98V. For example, the controller 103 determines that the pin S1 is at the low level if an input potential is less than a threshold 1.65V and that the pin S1 is at the high level if the input potential is equal to or larger than the threshold value 1.65V. The pin P1 of the first connecter 102 is coupled to the node of the ground potential GND through the resistor R31 of the second external apparatus 121 illustrated in FIG. 1, and the pin P1 changes from the high level to the low level. The process goes to an operation S605.

In the operation S605, when the controller 103 detects the change of the pin P1 of the first connecter 102 from the high level to the low level, the controller 103 detects the potential of the pin S1 of the first connecter 102. If the pin P1 of the first connector 102 is at the high level, the controller 103 recognizes that neither the first external apparatus 111 nor the second external apparatus 121 is coupled to the first connecter 102.

In an operation S606, if the pin P1 of the first connecter 102 is at the low level and if the pin S1 of the first connecter 102 is at the low level, the controller 103 recognizes that the first external apparatus 111 is coupled to the first connecter 102. The process goes to an operation S607. If the pin P1 of the first connecter 102 is at the low level and if the pin S1 of the first connecter 102 is at the high level, the controller 103 recognizes that the second external apparatus 121 is coupled to the first connecter 102. The processing goes to an operation S611.

In the operation S607, the controller 103 selects the first external apparatus 111. Thus, as illustrated in FIG, 5A, an output of the low level selection signal SEL is maintained.

In an operation S608, as illustrated in FIG. 5A, the controller 103 changes the enable signal OE from the low level to the high level. If the enable signal OE becomes the high level, the transistor T4 is turned on, the enable signal OE# becomes the low level, and the switch 104 enters an enable state. When the enable signal OE# becomes the low level, the selection signal SEL is in the low level. Thus, the switch 104 couples the pin S7 of the first connecter 102 to the node of the ground potential GND, and couples the pin P4 of the first connecter 102 to the terminal of the diagnosis signal MD of the controller 103.

In an operation S609, the controller 103 changes the power source on signal PON from the low level to the high level. If the power source on signal PON becomes the high level, the transistors T2 and T1 are turned on, and the pins P2 and P3 of the first connecter 102 are coupled to the node of the power source potential 5V through the transistor T1. The controller 103 performs the processing of the first external apparatus 111.

In an operation S611, the controller 103 selects the second external apparatus 121. Thus, as illustrated in FIG. 5B, the controller 103 changes the selection signal SEL from the low level to the high level.

In an operation S612, the controller 103 changes setting of a signal of the pin S1 of the first connecter 102 in such a way that the signal is switched from the input signal to the output signal. Therefore, the controller 103 may output the luminance setting signal PRJ_PFM to the pin S1 of the first connecter 102. The terminal of the luminance setting signal PRJ_PFM of the controller 103 may be a General Purpose Input/Output (GPIO) terminal.

In an operation S613, as illustrated in FIG. 5B, the controller 103 changes the enable signal OE from the low level to the high level. When the enable signal OE becomes the high level, the transistor T4 is turned on, the enable signal OE# becomes the low level, and the switch 104 enters the enable state. When the enable signal OE# becomes in the low level, the selection signal SEL is at the high level. Thus, the switch 104 couples the pin S7 of the first connecter 102 to the terminal of the signal USB+ of the USB standard of the controller 103 and couples the pin P4 of the first connecter 102 to the terminal of the signal USB-of the USB standard of the controller 103.

In an operation S614, the controller 103 changes the power source on signal PON from the low level to the high level. When the power source on signal PON becomes the high level, the transistors T2 and T1 are turned on, and the pins P2 and P3 of the first connecter 102 are coupled to the node of the power source potential 5V through the transistor T1. The controller 103 performs the processing of the second external apparatus 121.

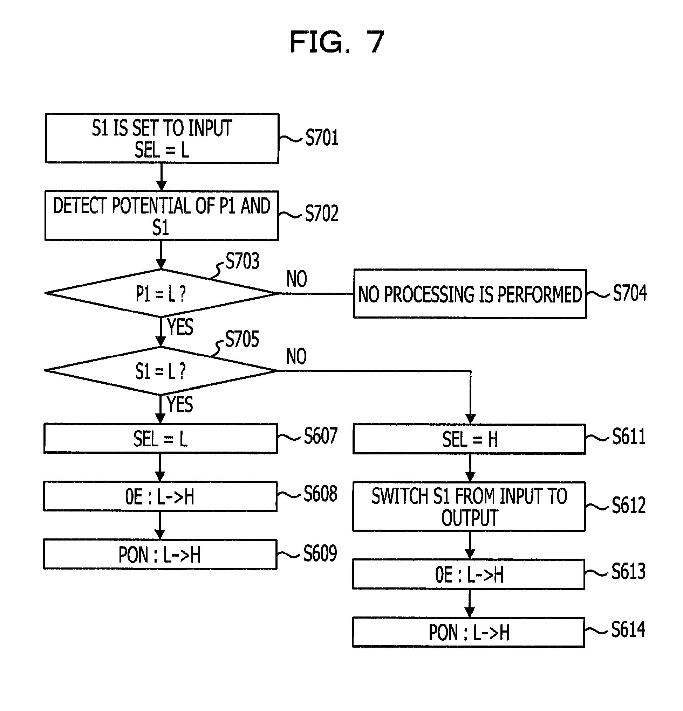

FIG. 7 illustrates an exemplary processing of a processing system. In FIG. 7, the processing device 101 may recover or start from a sleep state, a pause state, or a power source off state.

In an operation S701, the controller 103 sets a signal of the pin S1 of the first connecter 102 as an input signal and sets the selection signal SEL to the low level of an initial value.

In an operation S702, the controller 103 detects the potential of the pin P1 of the first connecter 102. If the change of the pin P1 of the first connecter 102 from the high level to the low level is detected in the operation S703, the potential of the pin P1 of the first connecter 102 is detected in an operation S705.

In an operation S703, when the high level of the pin P1 of the first connecter 102 is detected, neither the first external apparatus 111 nor the second external apparatus 121 is coupled to the first connecter 102. Thus, the controller 103 does not perform the processing (operation S704). When the pin P1 of the first connecter 102 is at the low level, the first external apparatus 111 or the second external apparatus 121 is coupled to the first connecter 102. Thus, the process goes to an operation S705.

In an operation S705, the potential of the pin S1 of the first connecter 102 is detected. When the pin S1 of the first connecter 102 is at the low level, the controller 103 recognizes that the first external apparatus 111 is coupled to the first connecter 102. The controller 103 may perform the processing that is substantially the same as or similar to the operations S607 to S608 illustrated in FIG. 6. When the pin S1 of the first connecter 102 is at the high level, the controller 103 recognizes that the second external apparatus 121 is coupled to the first connecter 102. The controller 103 may perform the processing that is substantially the same as or similar to the operations S611 to S614 illustrated in FIG. 6.

The first external apparatus 111 or the second external apparatus 121 may be detached from the processing device 101 in the power-on state. When the first external apparatus 111 or the second external apparatus 121 is detached from the processing device 101, the pin P1 of the first connecter 102 changes from the low level to the high level. When detecting that the pin P1 of the first connecter 102 changes from the low level to the high level, similarly to the operation illustrated in Fig. 7, the controller 103 sets the signal of the pin S1 of the first connecter 102 as an input signal and sets the selection signal SEL to the low level of the initial value.

The controller 103 sets the signal of the pin S1 as an input signal. When the potential of the pin P1 is at a first level, for example, the high level, the controller 103 recognizes that the first external apparatus 111 and the second external apparatus are not coupled to the first connecter 102. When the potential of the pin P1 is at a second level, for example, the low level, and when the potential of the pin S1 is at a third level, for example, the low level, the controller 103 recognizes that the first external apparatus 111 is coupled to the first connecter 102. When the potential of the pin P1 is at the second level, for example, the low level, and when the potential of the pin S1 is at a fourth level, for example, the high level, the controller 103 recognizes that the second external apparatus 121 is coupled to the first connecter 102. When the controller 103 recognizes that the second external apparatus 121 is coupled to the first connecter 102, the controller 103 sets the signal of the pin S1 as an output signal and outputs the luminance setting signal (first signal) PRJ_PFM to the pin S1.

The switch 104 switches a coupling destination of the pins S7 and P4 of the first connecter 102 between a case where the controller 103 recognizes that the first external apparatus 111 is coupled to the first connecter 102 and a case where the second external apparatus 121 is coupled to the first connecter 102.

When the controller 103 recognizes that the first external apparatus 111 is coupled to the first connecter 102, the controller 103 inputs and outputs the signals RTX, TX#, RX or RX# of the SATA standard to the first external apparatus 111. When the controller 103 recognizes that the second external apparatus 121 is coupled to the first connecter 102, the controller 103 inputs and outputs the signals USB+ and USB- of the USB standard to the second external apparatus 121.

An optical disk drive as the first external apparatus 111, a hard disk drive as the first external apparatus 111, and a projector as the second external apparatus 121 are able to be selectively attached to the processing device 101. The first connecter 102 of the processing device 101 and the second connecter 112 of the first external apparatus 111 may be connectors of the SATA standard. A general-purpose connecter may be continuously used.

The controller 103 sets the signal of the pin S1 as an input signal and then sets the signal of the pin S1 as an output signal after recognizing that the first external apparatus 111 or the second external apparatus 121. Therefore, the second connecter 112 of the SATA standard of the first external apparatus 111 has no unused pin, the controller 103 may recognize either the first external apparatus 111 or the second external apparatus 121 is coupled.

Even if a connecter is not used to attach an external battery, the first external apparatus 111 or the second external apparatus 121 may be attached to the processing device 101. Therefore, if the external battery is not attached, the connecter that is used to attach the external battery may not be attached to the processing device 101.

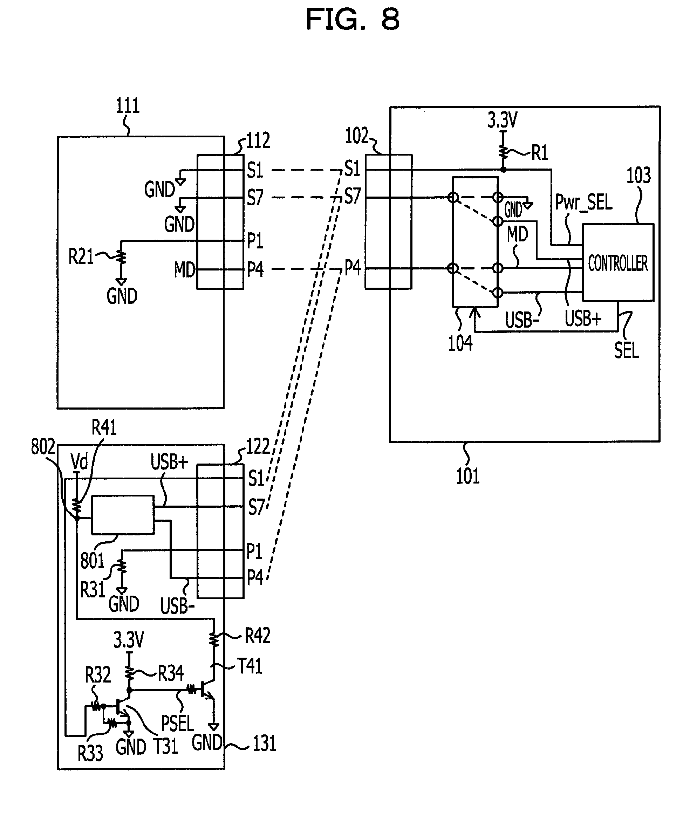

FIG. 8 illustrates an exemplary processing system. The processing system illustrated in FIG. 8 may include a third external apparatus 131 instead of the second external apparatus 121 of the processing system illustrated in FIG. 1. The third external apparatus 131 may be, for example, a USB bay unit, so that a USB device is able to be coupled to the processing device 101. In the third external apparatus 131 illustrated in FIG. 8, a USB hub controller 801 is provided instead of a processing unit 123 with respect to the second external apparatus 121 illustrated in FIG. 1, and the npn bipolar transistor T41 and resistors R41 to R43 are added in the second external apparatus 121. The configuration and the processing of the third external apparatus 131 illustrated in FIG. 8 are substantially the same as or similar to the configuration and the processing of the second external apparatus 121 illustrated in FIG. 1.

The pin S7 of the third connecter 122, which may be a pin of the signal USB+ of the USB standard, is coupled to the USB hub controller 801. The pin P4 of the third connecter 122, which may be a pin of the signal USB- of the USB standard, is coupled to the USB hub controller 801. The USB hub controller 801 distributes the differential signals USB+ and USB- of the USB standard into USB signals of a plurality of USB devices. A power source node 802 of the USB hub controller 801 is coupled to the node of a power source potential Vd through the resistor R41. The power source potential Vd may be, for example, 5V.

The collector of the npn bipolar transistor T41 is coupled to the power source node 802 of the USB hub controller 801 through the resistor R42. The base of the npn bipolar transistor T41 is coupled to the collector of the npn bipolar transistor T31 through the resistor R43. The emitter of the npn bipolar transistor T41 is coupled to the node of the ground potential GND.

The controller 103 in the processing device 101 may output a power saving mode setting signal Pwr_SEL instead of the luminance setting signal PRJ_PFM illustrated in FIG. 2. The low level power saving mode setting signal Pwr_SEL indicates a power saving mode. The high level power saving mode setting signal Pwr_SEL indicates a normal operation mode.

In the normal operation mode, the controller 103 outputs the high level power saving mode setting signal Pwr_SEL. If the power saving mode setting signal Pwr_SEL is at the high level, the npn bipolar transistor T31 is turned on. The power saving mode setting signal PSEL as a collector voltage of the npn bipolar transistor T31 becomes the low level. The transistor T41 is turned off, the power source potential Vd is supplied to the power source node 802 of the USB hub controller 801, and the USB hub controller 801 performs the normal operation.

In the power saving mode, the controller 103 outputs the power saving mode setting signal Pwr_SEL at the low level. If the power saving mode setting signal Pwr_SEL is at the low level, the transistor T31 is turned off, and the power saving mode setting signal PSEL as a collector voltage of the npn bipolar transistor T31 becomes the high level. The transistor T41 is turned on, the power source potential Vd is not supplied to the power source node 802, and the USB hub controller 801 may not operate. Accordingly, the power saving may be achieved.

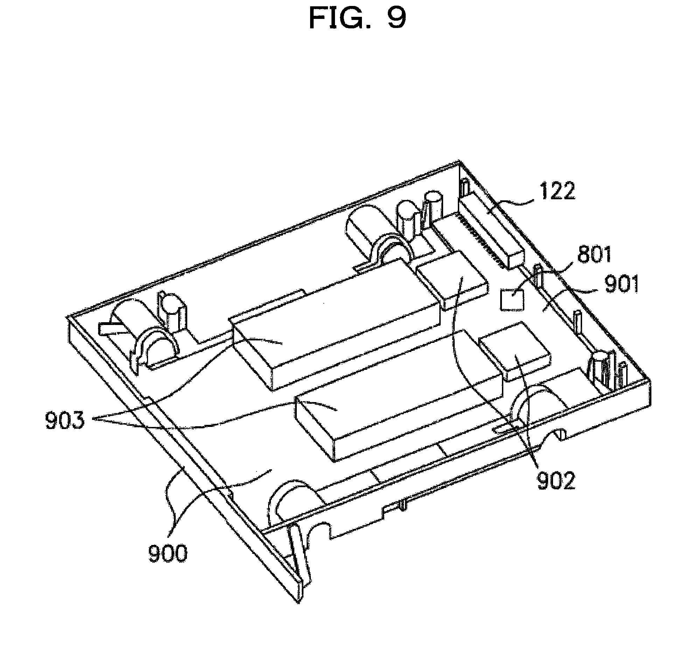

FIG. 9 illustrates an exemplary external apparatus. FIG. 9 may illustrate a perspective view of the appearance of the third external apparatus 131 illustrated in FIG. 8. The third external apparatus 131 may be a USB bay unit. The third external apparatus 131 includes a housing 900, the third connecter 122, the USB hub controller 801, a print substrate 901, two USB connecters 902, and two USB devices 903. The print substrate 901 and the third connecter 122 are fixed to the housing 900. The third connecter 122, the USB hub controller 801, and the two USB connecters 902 are electrically coupled to the print substrate 901. The two USB devices 903 may be general-purpose USB devices such as USB memory, for example. The two USB devices 903 are able to be attached to the two USB connecters 902, respectively. A user may attach two USB devices 903. The USB hub controller 801 may branch the USB signal of the third connecter 122 into the USB signals of the two USB connecters 902. Therefore, the third connecter 122 may input and output the USB signal to and from the two USB devices 903.

The processing device 101 may be a laptop personal computer, for example. When specific application software is executed, an authentication code may be desired. The user may execute the specific application software by inserting an USB memory that stores the authentication code into the processing device 101. The processing device 101 includes an external USB connecter terminal as well as the third external apparatus 131. When the USB memory is inserted into the external USB connecter terminal, the USB memory has a projection to the processing device 101. The projection may easily touch, disturb, or break peripheral objects.

The USB memory may be inserted as the USB device 903 into the third external apparatus 131. The USB device 903 may be stored in the housing 900 of the third external apparatus 131. The third external apparatus 131 may be a cartridge detachable to and from the processing device 101 and may be stored in the processing device 101. Therefore, inconvenience caused by the projection of the USB memory may be reduced. The user may execute the specific application software by inserting the USB memory storing the authentication code, as the USB device 903, into the third external apparatus 131 and inserting the third external apparatus 131 into the processing device 101. The user may insert and use an arbitrary USB device 903 into the third external apparatus 131.
All examples and conditional language recited herein are intended for pedagogical purposes to aid the reader in understanding the principles of the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiment(s) of the present invention(s) has(have) been described in detail, it should be understood that the various changes, substitutions, and alterations could be made hereto without departing from the spirit and scope of the invention.

## Claims

1. A processing device comprising:
a first connecter including a first pin and a second pin which is able to be coupled to one of a first external apparatus and a second external apparatus; and
a controller to set a signal of the second pin as an input signal, detect coupling of the first connecter with the first external apparatus or the second external apparatus, set the signal of the second pin as an output signal based on detection of the coupling of the first connecter with the second external apparatus, and outputs a first signal to the second pin.

2. The processing device according to claim 1, wherein the controller recognizes that the first external apparatus and the second external apparatus are not coupled to the first connecter when the voltage of the first pin is at a first level.

3. The processing device according to claim 1 or 2, wherein the controller recognizes that the first external apparatus is coupled to the first connecter when the voltage of the first pin is at a second level and the voltage of the second pin is at a third level.

4. The processing device according to any preceding claim, wherein the controller recognizes that the second external apparatus is coupled to the first connecter when the voltage of the first pin is at the second level and the voltage of the second pin is at a fourth level.

5. The processing device according to any preceding claim, wherein the first connecter further includes a switch which switches a coupling destination of a third pin included in the first connecter based on a detection result of the controller.

6. The processing device according to any preceding claim, wherein the controller inputs and outputs a signal of a Serial Advanced Technology Attachment (SATA) standard to the first external apparatus if the controller recognizes that the first external apparatus is coupled to the first connecter, and
wherein the controller inputs and outputs a signal of a Universal Serial Bus (USB) standard if the second external apparatus is coupled to the first connecter.

7. The processing device according to any preceding claim, wherein the first signal is a luminance setting signal.

8. The processing device according to any preceding claim, wherein the first signal is a power saving mode setting signal.

9. A processing system comprising:
a processing device;
a first external apparatus; and
a second external apparatus,
wherein the processing device includes:
a first connecter including a first pin and a second pin which is able to be coupled to one of the first external apparatus and the second external apparatus; and
a controller that sets a signal of the second pin, detects, based on a voltage of the first pin and the voltage of the second pin, coupling of the first connecter with the first external apparatus and the second external apparatus, sets the signal of the second pin based on detection of the coupling of the first connecter with the second external apparatus, and outputs a first signal to the second pin.

10. A processing system comprising:
a processing device;
a first external apparatus; and
a second external apparatus,
wherein the processing device is a processing device according to any of claims 1 to 8.

11. The processing system according to claim 9 or 10, further comprising, a first resistor coupled between the second pin and a power source potential node.

12. The processing system according to any of claims 9 to 11, wherein the first external apparatus includes a second connecter that includes a third pin and a fourth pin and is able to be coupled to the first connecter,
wherein the fourth pin of the second connecter is coupled to a ground potential node.

13. The processing system according to any of claims 9 to 12, wherein the second external apparatus comprises:
a third connecter that includes a fifth pin and sixth pin and is able to be coupled to the first connecter;
a bipolar transistor of which a base is coupled to the sixth pin; and
a second resistor coupled between the base and an emitter of the bipolar transistor.
